# EUROPÄISCHE PATENTSCHRIFT

(11) **EP 0 541 975 B1**
(45) Veröffentlichungstag und Bekanntmachung des Hinweises auf die Patenterteilung: **08.01.1997**
(21) Anmeldenummer: 92117436.3
(22) Anmeldetag: 13.10.1992
(51) Int. Cl.: A01F 29/10

(54) **Einzugsgehäuse für Feldhäcksler**
Loading house for a forage harvester
Dispositif d'alimentation hacheuse pour une ramasseuse

(30) Priorität: 11.11.1991 DE 4136948
(43) Veröffentlichungstag der Anmeldung: 19.05.1993
(73) Patentinhaber: CLAAS SAULGAU GMBH, D-88340 Saulgau (DE)
(72) Erfinder: Knittel, Franz, W-7968 Saulgau-Fulgenstadt (DE)

(56) Entgegenhaltungen:
- DE-A- 2 149 974
- US-A- 3 913 303

## Beschreibung

Die Erfindung bezieht sich auf Einzugsgehäuse für Feldhäcksler nach dem Gattungsbegriff des Anspruches 1.

Einzugsgehäuse dieser Art sind z. B. aus der DE-OS 21 49 974 bekannt. Hier sollte die Aufgabe gelöst werden, die offenen Schlitze in den Gehäusewänden mit Schiebern so abzudecken, daß kein Häckselgut nach außen treten konnte. Da hier die Bewegung der Walzen bei ihrer Höhenbewegung nicht streng definiert war, mußten die Schieber mit großem seitlichen Spiel in ihre jeweiligen Führungen eingepaßt werden. Das führte in der Praxis dazu, daß zum einen sich die Schieber in den Führungen leicht verkanten konnten und zum anderen, daß das innerhalb des Spieles der Seitenbewegungen des Schiebers eingedrungene Häckselgut in den Führungen so verdichtet wurde, daß nach einiger Zeit die Bewegung der Schieber blockiert wurde.

Beide Nachteile können erfindungsgemäß dadurch vermieden werden, daß die Schieber entsprechend den kennzeichnenden Merkmalen des Anspruches 1 oder des Anspruches 2 mit der Welle der höhenbeweglichen Einzugswalze verbunden sind. Bei solchen Ausführungen ist eine spannungsfreie Bewegung der Schieber während der Gutzuführung der Einzugswalzen möglich.

Die Erfindung wird anhand von zwei Abbildungen beispielsweise erläutert.

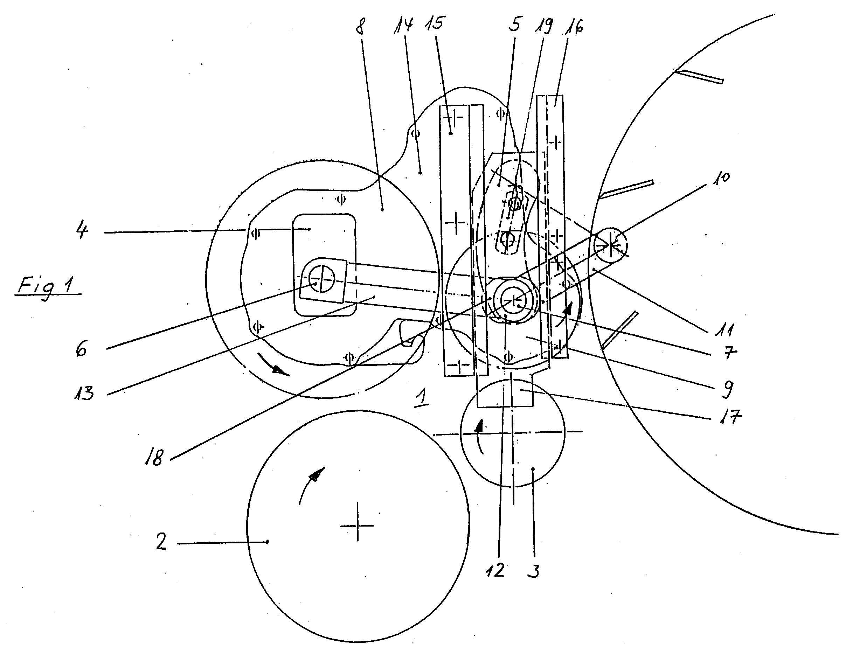

- Figur 1: zeigt ein Einzugsgehäuse schematisch in Seitenansicht

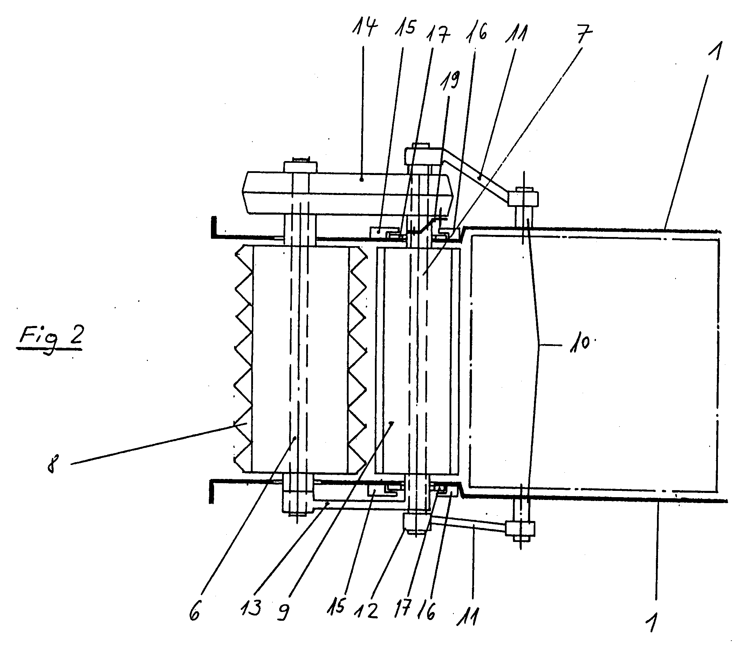

- Figur 2: zeigt den gleichen Gegenstand in Draufsicht

Ein Einzugsgehäuse hat zwei Gehäusewände (1). In diesen sind eine vordere und eine hintere untere Einzugswalze (2, 3) gelagert. Desweiteren sind Schlitze (4, 5) vorgesehen, durch die Wellen (6, 7) für eine vordere und eine hintere obere Einzugswalze (8, 9) durchtreten. An den Gehäusewänden (1) sind Bolzen (10) befestigt, auf denen Schwingen (11) drehbar gelagert sind. An den freien Enden (12) der Schwingen (11) ist die Welle (7) der hinteren oberen Einzugswalze (9) gelagert. Koaxial zu der Welle (7) sind auf der einen Seite des Einzugsgehäuses ein Lenker (13) und auf der anderen Seite ein Getriebegehäuse (14), das gleichzeitig als Lenker dient, schwingbar gelagert. Das freie Ende des Lenkers (13) und das Getriebegehäuse (14) werden von der Welle (6) für die vordere obere Einzugswalze (8) durchsetzt. Die vordere und die hintere Einzugswalze (8, 9) können sich entgegen der Wirkung nicht dargestellter Federn nach oben bewegen. An den Außenflächen der Gehäusewände (1) sind im Bereich der Schlitze (5) eine vordere Führung (15) und eine hintere Führung (16) fest angebracht. In ihnen können Schieber (17) nach oben und unten gleiten. Die Schieber (17) sind in die Führungen (15, 16) so satt eingepaßt, daß sie sich beim Verschieben nicht verkanten können. Der Schieber (17) auf der einen Seite des Einzugsgehäuses hat ein etwa waagrecht liegendes Langloch (18), das von der Welle (7) durchsetzt wird. Der Schieber (17) auf der anderen Seite hat ebenfalls einen Durchlaß für die Welle (7). Er ist aber zusätzlich noch mittels einer Lasche (19) mit dem Getriebegehäuse (14) gelenkig verbunden. Dadurch können die Schieber (17) Höhenbewegungen der Welle (7) bzw. des Getriebegehäuses (14) folgen, ohne sich in ihren Führungen (15, 16) zu verklemmen.

Schieber der beschriebenen Art können sinngemäß auch zur Abdichtung der vorderen Schlitze (4) vorgesehen werden.

## Patentansprüche

1. Einzugsgehäuse für Feldhäcksler, mit höhenbeweglichen Einzugswalzen (8, 9), von denen mindestens eine an Lenkern (11), die an dem Einzugsgehäuse drehbar befestigt sind, kreisbogenförmig schwingbar gelagert ist, und mit Schlitzen (4, 5) in den Gehäusewänden (1), die von den Wellen (6, 7) der Einzugswalzen (8, 9) durchsetzt werden, sowie mit ebenfalls höhenbeweglichen, durch Führungen (15, 16) gegen Querbewegung gehaltenen Schiebern (17), die die Schlitze (5) in den Gehäusewänden (1) abdecken, dadurch gekennzeichnet, daß die Schieber (17) mittels einer Lasche (19) oder dergleichen Koppelelement mit einem, mit der Welle (7) der Einzugswalze (9) höhenbeweglichen Bauteil, z., B. einem Getriebegehäuse (14), derart gelenkig verbunden sind, daß sich die Schieber (17) synchron zu der Welle (7) nach oben oder unten bewegen.

2. Einzugsgehäuse nach Anspruch 1, dadurch gekennzeichnet, daß als Koppelelement die Welle (7) der Einzugswalze (9) oder ein auf der Welle (7) angeordnetes Bauelement, z. B. Nabe, dient, die an den Längsseiten eines im Schieber (17) etwa waagrecht verlaufenden Langloches (18) zur Anlage kommt.

## Claims

1. A draw-in housing for forage harvesters, comprising draw-in rollers (8, 9) which are movable in respect of height and of which at least one is mounted pivotably in a circular arc on links (11) which are rotatably secured to the draw-in housing, and slots (4, 5) in the housing walls (1) through which pass the shafts (6, 7) of the draw-in rollers (8, 9), and sliders (17) which are also movable in respect of height and which are prevented from transverse movement by guides (15, 16) and which cover over the slots (5) in the housing walls (1), characterised in that the sliders (17) are so pivotably connected by means of a plate (19) or the like coupling element to a component, for example a transmission housing (14), which is movable in respect of height with the shaft (7) of the draw-in roller (9), that the sliders (17) move upwardly or downwardly synchronously with respect to the shaft (7).

2. A draw-in housing according to claim 1 characterised in that the coupling element is the shaft (7) of the draw-in roller (9) or a component, for sample a hub, arranged on the shaft (7), which comes to bear against the longitudinal sides of a slot (18) extending approximately horizontally in the slider (17).

## Revendications

1. Carter d'alimentation pour une ramasseusehacheuse comportant des cylindres d'alimentation (8,9) déplaçables en hauteur dont l'un au moins est monté de manière à pouvoir osciller suivant un arc de cercle sur des bras oscillants (11) qui sont fixés de manière à pouvoir tourner au carter d'alimentation, et comportant des fentes (4,5) formées dans les parois (1) du carter et qui sont traversées par les arbres (6,7) des cylindres d'alimentation (8,9), ainsi que des coulisseaux (17) qui sont également déplaçables en hauteur et sont bloqués contre tout déplacement transversal par des guides (15,16) et qui recouvrent les fentes (5) ménagées dans les parois (1) du carter, caractérisé en ce que les coulisseaux (17) sont reliés de façon articulée au moyen d'une patte (19) ou d'un élément d'accouplement analogue à un composant qui est déplaçable en hauteur avec l'arbre (7) du cylindre d'alimentation (9), par exemple un boîtier de transmission (14) de telle sorte que les coulisseaux (17) se déplacent vers le haut ou vers le bas en synchronisme avec l'arbre (7).

2. Carter d'alimentation selon la revendication 1, caractérisé en ce qu'on utilise comme élément d'accouplement l'arbre (7) du cylindre d'alimentation (9) ou un composant, par exemple un moyeu qui est monté sur l'arbre (7) et vient s'appliquer contre les côtés longitudinaux d'un trou allongé (18) qui s'étend approximativement horizontalement dans le coulisseau (17).
